# EUROPEAN PATENT SPECIFICATION

(11) **EP 1 546 752 B1**
(45) Date of publication and mention of the grant of the patent: **22.08.2007**
(21) Application number: 03727916.3
(22) Date of filing: 26.05.2003
(51) Int. Cl.: G01S 3/14, G01S 5/00

(54) **DIRECTION FINDING CELL PHONES**
ZELLULARES TELEFON ZUR RICHTUNGSBESTIMMUNG
TELEPHONES CELLULAIRES RADIOGONIOMETRIQUES

(30) Priority: 29.05.2002 US 383594 P
(43) Date of publication of application: 29.06.2005
(73) Proprietor: Baussi, Lior, 42385 Netanya (IL)
(72) Inventor: BAUSSI, Lior, 42385 Netanya (IL); WALLACH, Alon, 52413 Ramat-Gan (IL)
(74) Representative: van Westenbrugge, Andries
(86) International application number: PCT/IL2003/000438
(87) International publication number: WO 2003/100452

(56) References cited:
- WO-A-00/28345
- GB-A- 1 475 414
- US-A- 2 523 280
- US-A- 3 939 477
- US-A- 5 389 934
- US-A- 6 111 539
- US-B1- 6 373 430

## Description

### RELATED APPLICATION

This application claims the benefit under 119(e) of US Provisional application 60/383,594, filed May 29, 2002.

### FIELD OF THE INVENTION

The invention relates to cell telephones and in particular to cell telephones adapted so that a cell telephone user can establish contact with another cell phone user responsive to the latter's position.

### BACKGROUND OF THE INVENTION

Circumstances arise in which a person is interested in establishing contact with another person he or she sees but does not know. Often, in such circumstances it is inconvenient, improper or perhaps too daunting for the person to walk up to the other person, introduce himself or herself and make the other's acquaintance. For example, a person might see another person in a crowd to whom he or she is attracted but cannot approach because the other person is involved in an activity that it would be rude to interrupt. Or a person might want to make the acquaintance of another person who is presenting a topic to a group of people but cannot wait until the other person finishes in order to introduce himself or herself to the other person. In such circumstances it would be advantageous for the person to be able to relatively easily establish discrete contact with the other person and exchange sufficient information to enable the two people to get in touch with each other at a later opportunity if the exchanged information warrants.

Benefon of Finland markets a GSM phone that comprises a GPS receiver, which provides coordinates of the location of a user of the phone. The GSM phone is described in the company's product data sheets [online]; [retrieved on May 21,2003]; retrieved from the internet <URL:www.benefon.com/products/esc/product_data.htm>. Users of the phones may determine locations of friends who also use the phones by requesting and receiving via SMS messages transmitted over the GSM network, the GPS coordinates of their respective locations. Coordinates of friends that a user of a Benefon phone receives are displayed on the phone's display screen over a background of a suitable map to indicate the friends' locations. However, the phone cannot generally be used by its user to approach and/or determine the location of a stranger, since access to another person's GPS coordinates requires that the other person's phone number be known, and presumably a stranger's phone number is not known.

WO 00/28345 describes a system comprising a transmitter unit that is attachable to an object and arranged to transmit a signal having a determined frequency and a base unit having a receiver arranged to receive the transmitter unit signal. In accordance with an embodiment of the system the base unit is mobile, either as a portable unit or for instance mounted in or to a vehicle.

GB-A 1475 414 describes an arrangement comprising an antennae system for automatically finding the directions of incidence of a plurality of waves having respective different carrier frequencies within a predetermined frequency band.

US 6,373,430 describes a portable GPS/radio unit that communicates over a wireless radio network with at least one other unit which is transmitting radio signals over the network indicative of that unit's location.

### SUMMARY OF THE INVENTION

An aspect of some embodiments of the present invention relates to providing a communication system that enables a first person to discretely exchange information with a second person responsive substantially only to the second person's spatial location in the first person's field of view. Optionally, the first person does not have to know the second person or any of the second person's personal data in order to establish contact and exchange information with the second person. This objective has been achieved by means of the system defined in the appended claims.

According to an aspect of some embodiments of the present invention the communication system comprises cell phones, hereinafter referred to as "radar phones", at least some of which comprise circuitry for transmitting a radio beacon (RB) signal and at least some of which comprise direction-finding (DF) circuitry. The RB and DF circuitry in the cell phones are in addition to conventional circuitry for supporting conventional cell phone telephony.

In accordance with an embodiment of the invention, a radar phone operated in a DF mode by a person transmits at least one optionally non-directional signal, hereinafter an "interrogation signal". The interrogation signal has sufficient intensity so that it is readily receivable by radar phones operating in a radio beacon (RB) mode that are carried by people located in at least a portion of the operator's field of view in a neighborhood of the operator. Each RB mode phone that receives the interrogation signal responds by transmitting a signal, i.e. a "radio beacon signal", comprising a CW signal and ID data that can be used to identify the radar phone transmitting the RB signal and/or its operator. The DF and RB phones transmit and receive interrogation and radio beacon signals at a frequency or frequencies in a suitable frequency band, hereinafter a "DF channel", which may for example be a portion of the bandwidth used for conventional cellular telephony or an ISM band.

RB signals transmitted by the RB phones that are received by the DF phone are processed by the DF phone to determine azimuths and optionally ranges for locations of the transmitting RB phones. Once the DF phone determines azimuths and optionally ranges for the RB phones, positions of the RB phones are indicated on a display screen of the DF phone. Optionally, the positions are indicated by suitable icons, hereinafter "RB icons", displayed on the DF phone screen against a background display of a radar screen. The location of the RB icons on the "radar screen" correspond to the spatial locations of the RB phones relative to the DF phone orientation.

By scanning his or her field of view and the radar screen display of RB icons, the operator can associate a given RB icon with a corresponding person in the field of view. Using any of various methods known in the art, the operator selects an RB icon on the screen corresponding to a particular person in the operator's field of view with whom the operator would like to establish contact.

Following selection of the icon, the operator may then use the DF phone to transmit, optionally over the DF channel, a suitable SMS message to the selected person's radar phone providing data that would enable the selected person, if the selected person wishes, to contact the operator. The SMS message comprises ID data comprised in the RB signals received from the selected person's radar phone that identifies the selected radar phone. Radar phones that receive the SMS message operate responsive to the ID data so that only the radar phone for which the SMS message is intended accepts the message and stores it in a cell phone memory. In some embodiments of the invention, if the ID data transmitted by the selected person's RB phone comprises a cell phone number, the operator may control his or her DF phone to transmit an SMS message to the selected RB phone by conventional cell telephony.

In accordance with an aspect of some embodiments of the present invention, the direction finding circuitry in a radar phone comprises a Watson-Watt direction finder having two identical antennae. The direction finding circuitry processes signals sensed by both antennae to determine azimuths and ranges using methods known in the art. Cell telephony circuitry uses one of the antennae to transmit and receive conventional telephony signals. The radio beacon transmitting circuitry may be any suitable transceiver known in the art that can receive signals transmitted over the DF channel and transmit a suitable radio beacon for a radar phone operating in an RB mode, in accordance with an embodiment of the present invention.

The DF and/or RB circuitry in a radar phone is coupled to the phone's antennae via switching circuitry that protects the DF and/or RB circuitry from being damaged by conventional telephony signals generated by the cell phone. In accordance with some embodiments of the present invention the switching circuitry automatically prevents operation of the phone in the DF or RB mode from interfering with conventional cell telephony.

There is therefore provided in accordance with an embodiment of the present invention a direction finding system comprising: at least one first hand holdable unit comprising circuitry that transmits a radio beacon signal; and at least one second hand holdable unit having a display screen and comprising direction finding (DF) circuitry that receives a radio beacon (RB) signal transmitted by a first unit of the at least one first unit and determines from the received radio beacon signal an azimuth angle for the location of the first unit; wherein the controller generates a display on the display screen responsive to the azimuth angle that indicates a location of the first unit. Optionally, the direction finding circuitry comprises Watson Watts direction finding circuitry.

Optionally, the at least one second unit comprises for receiving RB signals, a first antennae and a second antenna electrically connected to the Watson Watts direction finding circuitry. Optionally, a difference in signal attenuation between the electrical connections of the antennae to the Watson Watts circuitry is less than about 0.3 dB. Optionally, a difference in signal attenuation between the electrical connections of the antennae to the Watson Watts circuitry is less than about 0.2 dB. Optionally, a difference in signal attenuation between the electrical connections of the antennae to the Watson Watts circuitry is less than about 0.1 dB.

In some embodiments of the present invention, the antennae have an electrical length less than about one fifth the wavelength of a carrier wave of the radio beacon signal. Optionally, the antennae have an electrical length equal to about one sixth the wavelength of the carrier wave of the radio beacon signal.

In some embodiments of the present invention, the two antennae are spaced apart by a distance less than about one fifth of the carrier wavelength. Optionally, the two antennae are spaced apart by a distance equal to about one eighth of the carrier wavelength.

In some embodiments of the present invention, the Watson Watts circuitry determines the azimuth from a difference between amplitude and/or phase of the received RB signal at the antennae.

In some embodiments of the present invention, the at least one first unit comprises circuitry and apparatus that provides conventional cell phone telephony. Optionally, the at least one first unit comprises a common antenna for transmitting RB signals and for cell phone telephony functions. Optionally, the at least one first unit comprises a switch controllable to selectably, electrically connect the common antenna to the radio beacon circuitry or the cell phone circuitry.

In some embodiments of the present invention, the at least one second unit comprises circuitry and apparatus that provides conventional cell phone telephony. Optionally, the at least one second unit comprises a switch controllable to selectably, electrically connect the first antenna to the direction finding circuitry or the cell phone circuitry.

In some embodiments of the present invention, the RB signals comprise a carrier wave and the at least one first unit and the at least one second unit comprise a filter that blocks electromagnetic energy at a frequency of the carrier wave from reaching the cell phone circuitry.

In some embodiments of the present invention, the direction finding circuitry determines a range for the first unit of the at least one unit responsive to the received RB signal. Optionally, the direction finding circuitry determines a DC level of the RB signal. Optionally, the controller determines the range responsive to magnitude of the DC level. The controller optionally, generates the display responsive to the determined range.

In some embodiments of the present invention, the at least one second unit comprises circuitry for transmitting signals to the at least one first unit and the at least one first unit comprises circuitry for receiving signals transmitted by the at least one second unit.

Optionally, a second unit of the at least one second unit transmits an interrogation signal responsive to which a first unit of the at least one first unit that receives the interrogation signal transmits an RB signal. Optionally, subsequent to transmitting the interrogation signal the second unit transmits at least one additional interrogation signal. Optionally, the at least one additional interrogation signal is transmitted following a delay period that begins after a last RB signal received by the second unit that is transmitted by the at least one first unit responsive to the preceding interrogation signal. In some embodiments of the present invention, each interrogation signal transmitted by the second unit comprises ID data specific to a user of the second unit.

Optionally, each of the at least one first unit is programmable with preference data specific to a user of the first unit and if it receives an interrogation signal transmitted by the second unit it transmits an RB signal responsive thereto only if the ID data in the transmitted interrogation signal matches preference data with which it is programmed.

In some embodiments of the present invention, the transmitting circuitry of each first unit transmits its RB signal following a predetermined delay period after receipt of an interrogation signal. Optionally, the predetermined delay period for each first unit is chosen from plurality of different delay periods so as to reduce a probability that any two of the first units that receive a same interrogation signal have a same delay period. Additionally or alternatively, the transmitting circuitry of the first unit dithers its predetermined delay period.

In some embodiments of the present invention, each first unit is programmable so that RB signals transmitted by the first unit comprises ID data specific to a user of the first unit. Optionally, each unit of the at least one second unit is controllable by its user to transmit a signal comprising ID data that it receives in an RB signal from a given first unit whose location is indicated in the display, which given first unit is selectable by the user from the display. Optionally, the second unit is programmable with preference data specific to the second unit's user and wherein the location of a first unit is indicated on the screen only if ID data in the RB signal received from the first unit matches preference data with which it is programmed.

In some embodiments of the present invention, the display indicating a position of a first unit comprises an icon representing the first unit displayed against a background of a radar screen and wherein a location of the icon on the radar screen corresponds to a location of the first unit relative to the orientation of the second unit. Optionally, a first unit of the at least one first unit is programmable so that RB signals that it transmits comprises data encoding at least one visual cue characteristic of the user of the first unit. Optionally, the controller of the at least one second unit displays on the screen, in association with an icon representing a first unit, a visual cue of the at least one visual cue encoded in an RB signal it receives from the first unit.

In some embodiments of the present invention, the RB signals comprise a carrier wave having a frequency in a range from about 800 MHz to about 900 MHz.

In some embodiments of the present invention, a second unit of the at least one second unit has an effective maximum range less than or equal to about 200 meters for receiving RB signals transmitted by a first unit that are useable to determine an azimuth for the first unit. Optionally, the maximum range is less than or equal to about 100 meters. Optionally, the maximum range is less than or equal to about 50 meters.

There is further provided a communication system comprising: a plurality of cellular phones each of which comprises a display screen a GPS receiver that determines spatial coordinates for the phone's position and a transceiver for transmitting non-telephony signals; wherein the transceiver of a first phone of the plurality of phones is controllable to transmit an interrogation signal responsive to which the transceiver of a second phone of the plurality of phones that receives the interrogation signal transmits a signal comprising GPS coordinates of the second phone; and if the first phone receives the signal transmitted by the second phone, it displays a position icon responsive to the GPS coordinates on the first phone's screen that indicates a location of the second phone.

Optionally, each phone comprises a compass that generates signals responsive to a heading of an operator of the phone and wherein the second phone displays responsive to the compass signals, and together with the position icon, a heading icon indicating the heading of the second phone's operator. Optionally, the compass comprises a GPS compass. Additionally or alternatively, the compass comprises a magnetic compass.

### BRIEF DESCRIPTION OF FIGURES

Non-limiting examples of embodiments of the present invention are described below with reference to figures attached hereto, which are listed following this paragraph. In the figures, identical structures, elements or parts that appear in more than one figure are generally labeled with a same numeral in all the figures in which they appear. Dimensions of components and features shown in the figures are chosen for convenience and clarity of presentation and are not necessarily shown to scale.
Fig. 1 schematically shows a man operating a radar phone in a DF mode to transmit information to woman in his field of view whom he would like to meet, in accordance with an embodiment of the present invention;
Fig. 2 schematically shows a block diagram of the radar phone DF circuitry comprised in the radar phone operating in the DF mode shown in Fig. 1, in accordance with an embodiment of the present invention; and
Fig. 3 schematically shows a block diagram of RB circuitry comprised in a radar phone, such as that carried by the woman contacted by the man shown in Fig. 1, in accordance with an embodiment of the present invention;

### DETAILED DESCRIPTION OF EXEMPLARY EMBODIMENTS

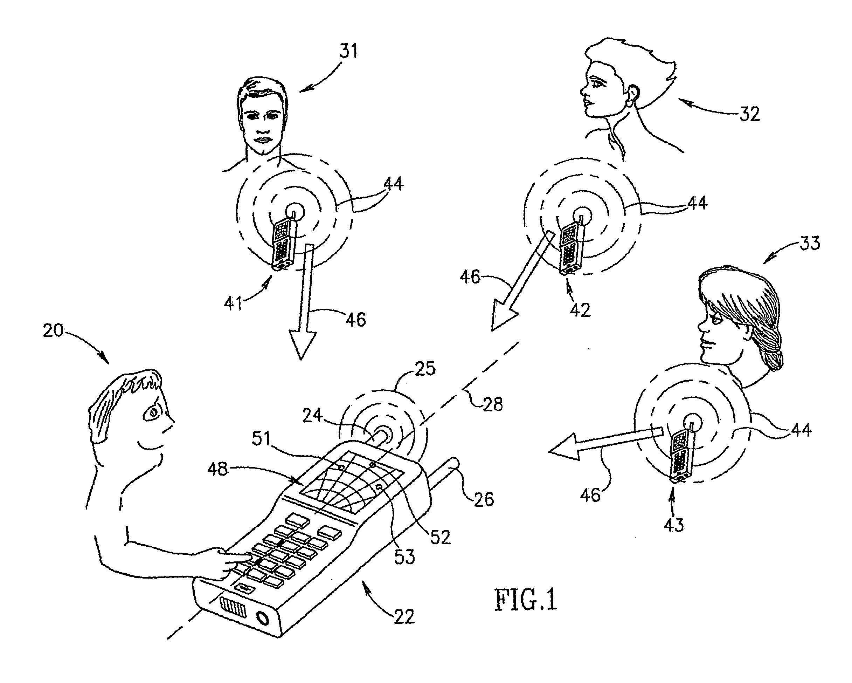

Fig. 1 schematically shows a man 20 operating a radar phone 22 to transmit information to a woman in his field of view whom he would like to meet, in accordance with an embodiment of the present invention.

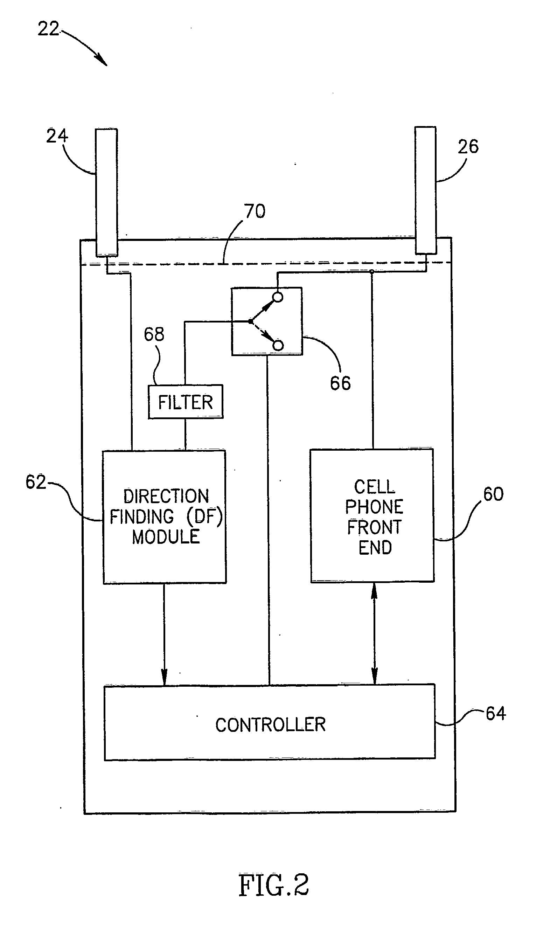

Radar phone 22 comprises two antennae 24 and 26 and direction finding (DF) circuitry coupled to the antennae that enable the radar phone to locate the source of radio beacon (RB) signals transmitted by radar phones operating in a radio beacon mode. Features of the direction finding circuitry and its integration with conventional cell phone circuitry comprised in radar phone 22 are presented below in the discussion of Fig. 2.

Operator 20 has selected from a menu (not shown) in his radar phone 22 an option to operate the phone in a direction finding (DF) mode. In the DF mode, radar phone 22 periodically transmits an interrogation signal, schematically represented by dashed circles 25. Interrogation signal 25 is transmitted over a DF channel, which may for example be a frequency band that is a portion of the bandwidth used for conventional cellular telephony or an ISM band. The signal is, optionally, substantially non-directional and may readily be received in a neighborhood of operator 20 that includes at least a portion of the operator's field of view. Transmission of the interrogation signal is controlled by a controller (shown in Fig. 2) in accordance with a DF transmission algorithm with which the controller is programmed.

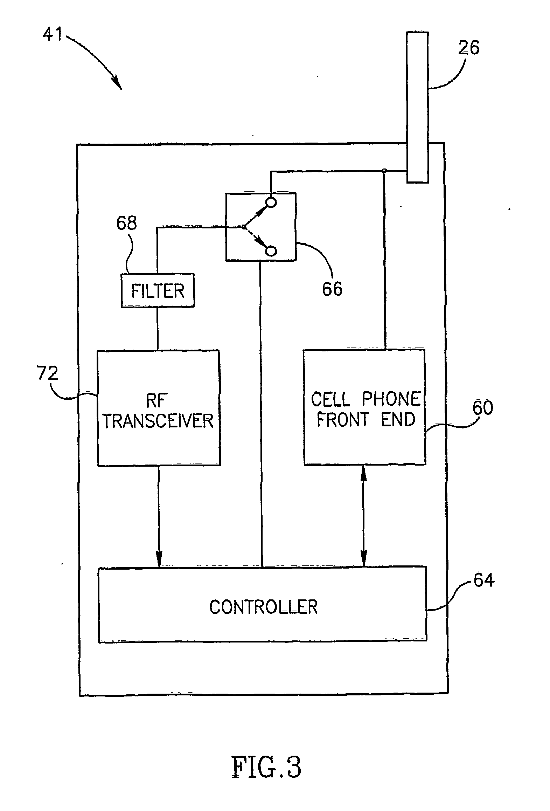

By way of example, three people 31, 32 and 33 carrying radar phones 41, 42 and 43 respectively are located in the field of view of operator 20 and are operating in a radar beacon (RB) mode. Each phone 41, 42 and 43 is capable of operating in the RB mode but, optionally, not in the direction finding mode. As a result, each phone 41, 42 and 43 has a single antenna 50 rather than two antennae, which are required for a radar phone in accordance with the invention to enable the radar phone to operate in the DF mode. Features of RB circuitry comprised in radar phones 41, 42 and 43 and integration of the circuitry with conventional cell phone circuitry comprised in the phones are presented below in the discussion of Fig. 3.

In the RB mode each radar phone 41, 42 and 43 listens to its radio environment to detect presence of an interrogation signal. Upon detection of interrogation signal 25 transmitted by radar phone 22, each radar phone 41, 42 and 43 attempts to respond to the interrogation signal with a transmission of an RB signal comprising a CW portion and ID data that identifies the phone. Transmission of the RB signal by a radar phone 41, 42 or 43 is controlled by a controller (Fig. 3) comprised in the cell phone in accordance with an RB transmission algorithm with which the controller is programmed. The 12B transmission control algorithm for each radar phone 41, 42 and 43 optionally controls the radar phone to transmit its RB signal a predetermined number of times following an optionally fixed, predetermined delay period that begins, optionally, upon cessation of reception of interrogation signal 25. Optionally, each radar phone 41, 42 and 43 transmits its RB signal a same number of times following reception of interrogation signal 25. Optionally, each radar phone transmits its RB signal once following reception of interrogation signal 25.

In accordance with an embodiment of the present invention, the RB transmission control algorithm that controls RB signal transmissions by a radar phone is programmed with a delay period selected from a preferably large number of different delay periods. Delay periods for RB transmission control algorithms are selected to reduce a probability that two radar phones operating in an RB mode that receive a same interrogation signal are programmed with a same delay time. Optionally, the RB transmission algorithm for a radar phone operating in an RB mode dithers its programmed time delay. Dithering reduces a probability that two RB operating phones receiving a same interrogation signal and having, by chance, a same delay period will clash in attempting to respond to the interrogation signal.

In addition, the RB transmission control algorithm for each radar phone 41, 42 and 43 controls the radar phone to listen to its radio environment to detect RB signals transmitted by other radar phones operating in an RB mode. If, during its delay period a radar phone 41, 42 or 43 detects an RB signal from another radar phone, the algorithm controls the phone to wait before transmitting its RB signal for a time equal to its delay period from a time at which the detected RB signal ends.

As a result, in response to interrogation signal 25, radar phones-41,42 and 43 transmit their respective RB signals, represented by concentric dashed circles 44, in sequence, one after the other in order of increasing length of their respective delay periods. Each RB signal 44 is substantially non-directional and comprises a CW transmission and, optionally in a header, data that identifies the phone 41, 42 or 43 transmitting the RB signal.

The DF transmission algorithm that controls transmission of interrogation signals 44 by radar phone 22 controls the phone so that once the phone transmits an interrogation signal 25 it waits an "interrogation delay period" following reception of an RB signal 44 before transmitting another interrogation signal. The interrogation delay period is chosen sufficiently long so that radar phone 22 does not transmit a second interrogation signal 25 following a first interrogation signal 25 until generally all phones 41, 42 and 43 transmit their respective RB signals 44 responsive to the first interrogation signal. Optionally, the interrogation delay period is a predetermined constant time period.

A portion, represented by a block arrow 46, of the energy from each RB signal 44 transmitted by a radar phone 41, 42 and 43 is received by radar phone 22. The DF circuitry in radar phone 22 uses the CW part of the received RB signal 44 from each radar phone 41, 42 and 43 to determine an azimuth and range for the radar phone transmitting the RB signal. Azimuth angle is determined relative to a plane midway between antennae 24 and 25 perpendicular to a plane that contains the antennae. A dashed line 28 indicates a line of intersection of the midway plane and the plane that contains the antennae. The DF circuitry transmits the determined azimuth and range for each radar phone 41, 42 and 43 to the controller comprised in radar phone 22.

The controller in radar phone 22 uses the determined azimuth and range for each radar phone 41, 42 and 43 to display an icon, *i.e,* an RB icon, representing the phone on a display screen 48 of DF radar phone 22. A position of the RB icon on the screen corresponds to the location of the radar phone 41, 42 and 43 that it represents in the field of view of operator 20. Optionally, the icon is displayed against a background image of a radar screen as schematically shown in Fig. 1. Icons 51, 52 and 53 on display screen 48 represent respectively RB radar phones 41, 42 and 43.

Of the three people 31, 32 and 33 in the field of view of operator 20, person 32 is a good-looking woman, whom the operator is interested in meeting but is too shy to approach directly. Operator 20 compares the positions of icons 51, 52 and 53 on display screen 48 with positions of people 31, 32 and 33 in his field of view and determines that icon 52 corresponds to woman 32. He composes an appropriate SMS message including data that optionally includes his cell phone number and personal information that he hopes will convince woman 32 to use the cell phone number to call him. Operator 20 then selects icon 52 using any of various methods known in the art, such as by repeatedly pressing a button on radar phone 22 to highlight each icon on display screen 48 in turn until icon 52 is highlighted.

Upon selection of icon 52, operator 20 controls the DF circuitry comprised in DF mode radar phone 22 to transmit the SMS message, optionally over a same DF communication channel that is used to transmit interrogation signals 24 and RB signals 44. Optionally, the DF circuitry transmits the SMS message over a radio communication channel different from the DF channel. The different communication channel may be a dedicated channel for radio transmission of data between DF mode radar phone 22 and RB mode radar phones 41, 42, and 43.

The SMS message is transmitted together with the ID data that identifies radar phone 42 carried by woman 32, which ID data radar phone 22 received with RB signal 44 transmitted by the woman's radar phone 42. The transmitted SMS message is received by all RB mode phones 41, 42 and 43 in the field of view of operator 20. However, because the SMS message is coded with the ID of RB radar phone 22, only RB radar phone 42 stores the SMS message in a memory comprised in the phone. At her leisure, the woman will read messages that her phone has stored and, hopefully for operator 20, will be convinced by his message to contact him.

Whereas in the above scenario operator 20 optionally transmits his SMS message to phone 42 over the DF channel, or another radio channel, in some situations the operator 20 may transmit his message via a conventional cell telephony channel. For example, the ID data comprised in RB signal 44 transmitted by RB phone 42 may comprise, instead of an ID identifier of the RB phone, the cell phone number of the RB phone. In that case, operator 20 can use his phone 22 to transmit his message via conventional cell telephony.

It is noted that in the above example there are only three people in the field of view of operator 20 and he is readily able to associate RB icon 52 with woman 32 from the few RB icons displayed on screen 48 of his radar phone 22. In many situations however a person's field of view may be crowded and it can be more difficult to associate a given person with a given icon.

In some situations an operator of DF mode phone may be aided in associating a particular icon with a given person he or she is interested in contacting by movement of the given person in the operators field of view. For example, if woman 32 was moving in a particular direction, operator 20 would be aided by corresponding motion of icon 52 on the screen of his radar phone that icon 52 corresponds to the woman.

In some embodiments of the invention ID data comprised in RB signals 44 transmitted by radar phones operating in an RB mode comprise visual cue data that aid in determining which icons displayed on screen 48 belong to which people in the field of view of operator 20. For example, assume that woman 32 is a red head. She may program her radar phone 42 so that RB signals 44 transmitted by the phone comprises ID data indicating the color of her hair. Operator 20 may access, *inter alia,* visual cue data for each RB icon on his screen using suitable options provided by the controller in his radar phone 22. Assuming that other people in the immediate vicinity of woman 32 are not red heads, operator 20 can readily associate with woman 32 that icon on his screen whose ID comprises "red hair". Visual cue data can be advantageous in crowded situations for which many people carrying RB mode phones responding to interrogation signals are located close to each other.

In some embodiments of the present invention, interrogation signals transmitted by a DF phone may comprise ID data associated with the operator of the DF phone. An RB phone may be programmed by its owner to transmit an RB signal only if the ID data in the interrogation signal corresponds to the RB phone's personal preferences. For example, the ID data in an interrogation signal may include data indicating that the owner of the DF phone transmitting the interrogation signal is a smoker. The RB phone may be programmed to respond with an RB signal only to non-smokers.

Interrogation signals may also comprise "preference data" responsive to which RB phones determine whether to transmit or not to transmit an RB signal, in accordance with an embodiment of the present invention. For example, an interrogation signal may indicate that an RB radar phone respond to the interrogation signal only if the RB phones owner in a non-smoker.

Programming DF and RB radar phones with their users' preferences in accordance with an embodiment of the invention improves efficiency of "match-making" provided by the radar phones. In addition the preferences in general reduce a number of RB phones that respond to interrogation signals transmitted by a given DF phone in a given situation. As a result, the given DF phone's screen will in general be less cluttered, and a user of the DF phone will find it easier to associate of RB icons displayed on the screen with people in the user's field of view.

In some situations, more than one person may be interested in operating a radar phone in a DF mode in a same region. RB signals transmitted by a radar phone operating in an RB mode are substantially non-directional. As a result, generally all radar phones of a plurality of radar phones operating in a DF mode in a same region will receive RB signals generated in response to an interrogation signal transmitted by any one of the DF mode radar phones. All the DF mode radar phones operating in the region will therefore be able to locate RB mode phones in the region that transmit RB signals responsive to the interrogation signals transmitted by the one DF mode radar phone. In general therefore, if a plurality of DF mode phones are operating in a same region, it is sufficient for a single one of the plurality of DF mode phones to transmit interrogation signals.

In accordance with an embodiment of the present invention, the DF algorithm in accordance with which DF operation of a DF mode radar phone is controlled suppresses transmission of interrogation signals by the radar phone if the phone senses interrogation signals are being transmitted by another DF mode phone. In some embodiments of the present invention a radar phone operating in a DF mode initiates transmission of interrogation signals if it does not sense an interrogation signal during a predetermined "waiting" period.

In some situations, the field of view of a first person operating a first radar phone in a DF mode may overlap but not be identical to the field of view of a second person operating a second DF phone in a DF mode. Transmission of interrogation signals by the first radar phone may prevent the second radar phone from transmitting interrogation signals resulting in the field of view of the second person not being satisfactorily covered by interrogation signal transmissions.

In accordance with an embodiment of the invention, the second radar phone generates a signal to alert the second person that RB signals that the second phone receives are not generated responsive to interrogation signals transmitted by the second phone. Responsive to the signal the second person may control his or her phone to transmit an interrupt signal requesting that the first phone cease transmission of interrogation signals. In some embodiments of the invention, upon receipt of the interrupt request signal the first phone generates a signal to alert the first person to the interrupt request, responsive to which the first person may defer to the request. In deferring to the request, the first person may control the first phone to stop operating in the DF mode or operate in a DF mode without transmitting interrogation signals.

In some embodiments of the invention a radar phone operating in a DF mode that receives an interrupt request automatically defers to the request and following an appropriate "interrupt delay" generates its own interrupt transmission requesting return of permission to transmit interrogation signals. In accordance with an embodiment of the invention, interrupt delays and interrogation delay periods of a plurality of radar phones operating in a same region in a DF mode are controlled so that the radar phones smoothly hand off one to the other the task of transmitting interrogation signals.

Fig. 2 schematically shows a block diagram, in accordance with an embodiment of the present invention, of component circuitry comprised in radar cell phone 22 operated by man 20 in Fig. 1. Radar phone 22 comprises a cell phone front end 60 for transmitting and receiving conventional cell phone telephone signals, a direction finding (DF) module 62 and a controller 64 connected to the front end and to the DF module. DF module 62 comprises a transceiver (not shown) for transmitting interrogation signals and receiving RB signals and direction finding circuitry for determining an azimuth and optionally a range for a radar phone transmitting an RB signal.

Cell phone front end 60 is permanently connected to antenna 26 and DF module 62 is permanently connected to antenna 24. DF module 62 is also connected to a switch 66, optionally via a narrow band filter 68. Switch 66 is controllable by controller 64 to selectably connect and disconnect DF module 62 (via filter 66) to antenna 66. Narrow band filter 68 substantially blocks cell telephony signals and transmits signals in the DF communication channel. Filter 68 substantially prevents DF module 62 from receiving energy from cell telephony signals received at antenna 26 and reduces loading of antenna 26 at cell telephony signal frequencies when switch 66 connects DF module 62 to the antenna. Controller 64 and front end 60 comprise conventional telephony circuitry and operate to provide conventional cell telephony communications. In the DF mode, controller 64 controls switch 66 to connect DF module 62 to antenna 26 and controls the DF module to transmit interrogation signals 25 and receive radar beacon signals 44 as described above.

Optionally, the direction finding circuitry in DF module 62 is Watson-Watt direction finding circuitry. Prior art Watson-Watt direction finders conventionally require antennae coupled to a relatively large ground plane having dimensions that would appear to prohibit incorporating a Watson-Watt direction finder in a cell-phone shell having acceptable and convenient dimensions. Watson-Watt direction finders and the theory of operation of conventional Watson-Watt direction finders are discussed in an article entitled "Basics of the Watson-Watt Radio Direction Finding Technique", Web Note WN-002, provided by RDF Products of the U.S.; [online]; [retrieved on May 23, 2003]; retrieved from the internet <URL:www.rdfproducts.com>, the disclosure of which is incorporated herein by reference. In spite of prior art convention, the inventors have found that it is possible to provide a Watson-Watt direction finder having antennae coupled to a relatively small ground plane, which has dimensions suitable for packaging in a conventional cell phone shell. In Fig. 2, antennae 24 and 26 of cell phone 22 are coupled to a relatively small ground plane schematically indicated by dashed line 70.

To provide a relatively small Watson-Watt direction finder, in accordance with an embodiment of the present invention, preferably direction-finding signals are transmitted at relatively high frequencies. For example, DF signals transmitted with carrier frequencies close to carrier frequencies in the ISM (800 MHz - 900MHz) bands are suitable for operating a Watson-Watt direction finder small enough to be conveniently incorporated in a cell-phone shell. The inventors have found that such a small "high frequency" Watson-Watt direction finder can be configured to provide satisfactory azimuth and range data for RB phones operating in a range from about 5 meters to about 100 meters from a DF phone comprising the Watson-Watt direction finder.

The above noted maximum range limitation of the Watson-Watt direction finder is determined substantially by a maximum power allowed for transmission of signals over the ISM band. Ranges in excess of 100 meters for reception of RB and interrogation signals are possible provided the signals are transmitted at appropriate power levels. For typical use such as indoors in a room or lecture hall, or outdoor use for example at a lawn party, a maximum operating range of 50 or 100 meters is generally satisfactory.

In accordance with an embodiment of the invention, the Watson-Watt direction finder operates with two antennae, antennae 24 and 26. Optionally, a difference in signal attenuation over leads that connect antennae 24 and 26 to DF module 62 is less than about 0.3 dB. Optionally, the difference in signal attenuation is less than about 0.2 dB. Optionally, the difference in signal attenuation is less than about 0.1 dB.

DF module 62 determines azimuth for an RB phone 41, 42 or 43 responsive to a difference between the phase and/or amplitude of RB signal 44 received from the RB phone at antennae 24 and 26. Optionally, DF module 62 determines a DC level of the received RB signal and determines a range for the RB phone responsive to the DC level. The range and azimuth determined for an RB phone are transmitted to controller 64, which uses the azimuth and optionally the range to display an icon representing the radar phone transmitting the RB signal on display screen 48 of radar phone 22.

Typical Watson-Watt direction finders coupled to two antennae comprise one quarter wavelength antennae spaced apart by about a half carrier wave wavelength. Direction finding is achieved by rotating the antennae to locate a direction in which a difference in a signal phase or amplitude at the two antennae are a minimum. A direction, *i.e.* azimuth, at which the difference is a minimum, is a direction along which the source of the signal is located. Such Watson-Watt direction finders have a relatively narrow azimuth angle dynamic range and can function satisfactorily with the narrow dynamic range because the antennae are rotated. In general, they have an effective dynamic range of about 30° and are sensitive to azimuth changes in the location of a signal source in a range of angles between about 15° on either side of a plane midway between the antennae and perpendicular to a plane that contains the antennae.

A field of view of a person generally extends in azimuth from about 90° to the right of a person to about 90° to the left of the person. For a direction finder, in accordance with the invention that displays locations of RB phones in a field of view of a person, it is advantageous for the direction finder to have an effective azimuth angle dynamic range larger than the typical dynamic range of prior art Watson-Watt direction finders.

The inventors have found that an antennae configuration for a Watson-Watt direction finder in which the antennae are shorter and more closely spaced than in a conventional prior art Watson-Watt direction finder provides increased azimuth angle dynamic range for the direction finder. In particular, for the ISM frequencies (800 MHz - 900MHz), electrical lengths of antenna 24 and 26 are advantageously less than about one fifth of the wavelength of an RB signal carrier wave and are spaced apart by less than about one fifth of the carrier wavelength. Preferably, the electrical lengths of antennae 24 and 26 are equal to about one sixth the wavelength of the carrier wave and are spaced apart by a distance equal to about one eighth the carrier wavelength. For the ISM frequencies and the relatively short and closely spaced antennae 24 and 26, a difference in amplitude of an RB signal received at antennae 24 and 26 from an RB phone is substantially linear with azimuth of the RB phone's location for a range of azimuths greater than the azimuth dynamic range of most conventional Watson-Watts configurations. The inventors have found that for a person holding a DF cell phone relatively perpendicular to the ground and between about 25 and 40 centimeters from his or her body, the azimuth may be substantially linear with amplitude difference for azimuths between about -60° to about + 60°. In some instances the linear range may extend from about -90° to about +90°. (The slope of the substantially linear relationship between azimuth and amplitude difference for azimuths from 0° to about -60° or -90° is opposite to the slope of the relationship between 0° and about +60° or +90°.)

In addition to the advantages of increased azimuth angle dynamic range, the inventors have also found that for the relatively short and closely spaced antennae 24 and 26, sensitivity of azimuths and ranges determined by DF module 62 to orientation of DF cell phone 22 is reduced. That is, direction finding is relatively less sensitive to how accurately cell phone 22 in Fig. 1 is held with antennae 24 and 26 perpendicular to the ground.

It is noted that a Watson-Watt direction finder coupled to two antennae does not distinguished between the location of signal sources that are mirror images of each other in a plane in which the antennae are located. For example, using the hours of a clock to indicate direction, assume that the plane containing antennae 24 and 26 are perpendicular to the face of the clock and intersects 3 o'clock and 9 o'clock. Assume further that the face of the clock is parallel to the ground so that antennae 24 and 26 and axis 28 (Fig. 1) are perpendicular to the ground. An RB phone at 12 o'clock and an RB phone at 6 o'clock would have RB icons at a same position on screen 48 (Fig. 1). Similarly, RB phones at 2 o'clock and at 4 o'clock would have icons at a same location on screen 48. Mirror image RB phones may be distinguished by operator 20 rotating his phone about axis 28 (Fig. 1). The RB phones at 12 and 2 o'clock will move right and the RB phones at 4 and 6 o'clock will move left.

Since cell phone front end 60 is permanently connected to antenna 26 radar phone 22 is always able to receive incoming telephony signals and by default, optionally, controller 64 controls circuitry in the radar phone so telephony functions override all DF functions of the radar phone. For example, if a telephony signal is received by radar phone 22 the radar phone interrupts DF mode functioning of the phone that may be in progress and controls switch 66 to disconnect DF module 62 from antenna 26. It is noted, that since filter 68 substantially blocks telephony signals DF module 62 substantially does not interfere with incoming or outgoing telephony signals received or transmitted respectively via antenna 26.

Fig. 3 schematically shows a block diagram of component circuitry comprised in radar phone 41 as well as in radar phones 42 and 43 (Fig. 1). Radar phone 41 comprises a cell phone front end 60 for transmitting and receiving conventional cell phone telephone signals, an RF transceiver 72 and a controller 64 connected to the front end and to the transceiver.

Since radar phone 41, optionally operates only in an RB mode (and of course a conventional telephony mode), as noted above the radar phone does not require two antennae and has only a single antenna 26. Single antenna 26 supports both conventional cell telephony and radio beacon modes. Similarly, to circuitry in radar phone 22, radar phone 41 comprises a cell phone front end 60 and controller 64 that support conventional cell phone telephony. Cell phone front end is permanently connected to antenna 26. Optionally, a narrow band filter 68) protects RF transceiver 72 and substantially prevents the transceiver from receiving energy from energy comprised in telephony signals.

Similarly to DF module 62 in cell phone 22 transceiver 72 is connected to a switch 66 optionally via a narrow band filter 68. Switch 66 is controlled by controller 64 to selectably connect and disconnect transceiver 72 from antenna 26. In the RB mode, controller 64 controls switch 66 to connect transceiver 72 to antenna 26 and controls the transceiver to transmit radar beacon signals 44 over the DF channel in response to received interrogation signals 25 as described above.

In the above description radar phone 22 is described as operating in a DF mode and radar phones 41, 42 and 43 are described as operating in an RB mode but not having capability of operating in a DF mode. In some embodiments of the invention a radar phone may selectively be operable in either a DF mode or an RB mode. For example, a radar phone such as radar phone 22 having a DF module and capable of operating in a DF mode may also be operable in an RB mode. In the RB mode controller 64 disconnects DF module 62 from antenna 26 and receives interrogation signals via antenna 24 and the RF transceiver comprised in the DF module. Controller 64 controls the RF transceiver to transmit RB signals in response to received interrogation signals in accordance with an RB transmission algorithm as described above.

It is noted that direction finding module 62 and radio beacon circuitry 72, i.e. RF transceiver 72, are comprised in cell phones having circuitry used for conventional cell phone telephony. The present invention is not limited to direction finding circuitry incorporated in cell phones and direction finding circuitry in accordance with an embodiment of the present invention may be used independently of cell phones and cell phone circuitry.

A hand-holdable direction finding communication unit, in accordance with an embodiment of the present invention, may for example comprise direction finding components and features similar to those found in cell phone 22 but not circuitry that provides conventional cell phone telephony functions (*e.g*. cell phone front end 60). A radio beacon communication unit, in accordance with an embodiment of the present invention, may similarly comprise components and features comprised in RB phone 41 but not circuitry for cell telephony functions. Similarly to communication between radar phones described above, transmission of data and SMS messages between direction finding units, hereinafter "DF units", and radio beacon units, hereinafter "RB units", may be provided over a same a DF communication channel used for direction finding or over a dedicated radio transmission channel.

By way of example of a use of DF and RB units that do not comprise telephony functions, such units may be handed out at a convention or ceremony to facilitate communication and contact between people attending the convention or ceremony. Since, as in the case of DF phones, which can also optionally function as RB phones, DF units can optionally also function as RB units and it may be expected that at a ceremony or convention only DF units that also function as RB units may be handed out.

By way of another example, DF and RB units may also be used for functions that do not involve only people. For example, a bird or moose hunter who hunts with dogs generally wants to known where his dogs are but may not be able to maintain visual contact with the dogs. Systems for tracking a hunter's dogs are known in the art. Pointer Position Solutions of Finland markets a system that enables a hunter who operates a handheld direction finder to determine an azimuth of a dog wearing a transmitter that transmits a radio beacon. The direction finder comprises circuitry for receiving the radio beacon and indicating strength of the received radio beacon signal. The hunter rotates the direction finder until the signal strength that it indicates is a maximum. A direction in which the direction finder points when the maximum is indicated is an azimuth of the dog. It is noted that the direction finder determines magnitude of a radio beacon signal transmitted from the dog's transmitter but not an azimuth for the dog. The hunter determines the azimuth from the direction in which the radio beacon signal is a maximum. The direction finder may be used to track up to two dogs but "switches" between the dogs and tracks only one dog at a time.

The company also markets a direction finding system for locating dogs using GPS. A hunter carries a GSM phone comprising a GPS-map navigator. A dog being tracked by the system wears a GSM/GPS transceiver that determines the dog's position using GPS satellite signal and transmits the position via a GSM cell telephony network to the hunter's phone. The dog's position may be displayed against a background map of a region in which the hunter and dog are hunting. Because a GPS receiver requires a direct line of sight between the receiver and at least three GPS satellites in order to determine its position, the system will not be able to update the dog's location for locations for which the three lines of sight do not exist. For example, if a dog being tracked wanders into a barn or thick underbrush the system will generally not be able to update the dog's position. For the same reason the Pointer dog-GPS system not is advantageously used for indoor tracking of pets. Pointer products are described in the company's product data sheets [online]; [retrieved on May 20, 2003]; retrieved from the internet <URL:www.pointersolutions.com>.

A dog tracking system that comprises DF and RB units in accordance with the present invention on the other hand may be used to provide a hunter with an azimuth and range for each of a plurality of greater than two dogs and can also operate indoors. For example, an RB unit may be mounted to each of the hunter's dogs and the hunter may operate a DF unit to determine an azimuth and range for each of the dogs from the radio beacon transmitted by the dog's RB unit. The azimuths and ranges for the dogs are used to display the positions of the dogs on the DF units "radar screen". For locating dogs in a typical hunting environment it may be advantageous to transmit RB signals at power levels that enable effective detection of the signals at ranges in excess of 100 meters. For example a range of about 200 meters may be advantageous. To aid in identifying each dog, the DF unit may generate a different RB icon on the screen of the DF unit for each dog responsive to ID data comprised in RB signals transmitted by the RB unit attached to the dog.

In some embodiments of a "direction finding" communication system in accordance with the invention, cell phones used in the system comprise GPS receivers to identify and determine locations of persons. In addition, the cell phones comprise a communication transceiver for transmitting non-telephony signals and optionally a magnetic compass and/or a GPS compass. Optionally the transceiver is an RF transceiver. Optionally the transceiver is a blue tooth transceiver. The GPS receiver in a cell phone determines and periodically updates its position, and thereby that of its operator, responsive to signals received from GPS satellites. The compass in a cell phone is used for determining a heading of the phone's operator. Each phone may selectably be operated in a "direction query" (DQ) mode or in a "query response" (QR) mode.

If a first person, such as for example operator 20 in Fig. 1, wants to access a second person, such as woman 32, the first person controls his phone to operate in the DQ mode. In the DQ mode, the transceiver in the first person's phone transmits non-directional interrogation signals, which are received by phones carried by people operating in a QR mode and that are within range of the transceiver.

Interrogation signals transmitted by the DQ phone are similar to interrogation signals transmitted by a DF phone, (*e.g*. DF phone 22) described above and may comprise any of the data and/or configurations of data, such as for example ID and/or preference data, comprised by interrogation signals transmitted by the DF phone. A QR phone that receives the interrogation signals may respond by controlling its transceiver to transmit non-directional QR signals. A decision of the QR phone whether or not to respond to the interrogation signals is optionally determined similarly to a manner in which a DF phone determines whether or not to respond to an interrogation signal. For example the QR phone optionally determines whether to respond to the interrogation signals responsive to data comprised in the interrogation signals and preferences with which the QR phone is programmed. Timing of transmission of interrogation signals transmitted by DQ phones and transmission of QR signals in response to the interrogation signals by QR phones is optionally controlled similarly to the way timing of transmission of DF and RB signals is controlled.

QR signals transmitted by the QR phone optionally comprise data and/or configurations of data, such as ID data and preference data that is comprised in RB signals transmitted by RB phones described above. In addition however, the QR signals comprise spatial coordinates determined by the QR phone's GPS receiver. The DQ phone uses the GPS coordinates comprised in QR signals that it receives to display on the DQ phone's display screen, "position icons" representing the QR phones that transmit the QR signals. An icon representing a QR phone has a location on the DQ phone's display screen that is homologous with the actual spatial location of the QR phone.

To aid the first person operating the DQ phone in determining positions of the responding QR phones relative to his or her own position, the DQ phone displays, together with the position icons, the first person's heading. The heading is determined responsive to data generated by the DQ phone's magnetic and/or GPS compass. Optionally, the position icons are displayed against a background of a radar screen. Optionally, the position icons are displayed against a background of a map of the first person's surroundings.

The first person uses the display of position icons on his DQ phone's display screen to identify a person, *e.g*. woman 32, whom he would like to contact, similarly to the way in which operator 20 uses the display on DF phone 22 (Fig. 1). Transmission of information to the person of his choice is accomplished by RF transmission using the DF phone's transceiver and/or by telephony transmission, as described above.

In the description and claims of the present application, each of the verbs, "comprise" "include" and "have", and conjugates thereof, are used to indicate that the object or objects of the verb are not necessarily a complete listing of members, components, elements or parts of the subject or subjects of the verb.

The present invention has been described using detailed descriptions of embodiments thereof that are provided by way of example and are not intended to limit the scope of the invention. The described embodiments comprise different features, not all of which are required in all embodiments of the invention. Some embodiments of the present invention utilize only some of the features or possible combinations of the features. Variations of embodiments of the present invention that are described and embodiments of the present invention comprising different combinations of features noted in the described embodiments will occur to persons of the art. The scope of the invention is limited only by the following claims.

## Claims

1. A direction finding system comprising:
at least one first hand holdable unit (41, 42, 43) comprising non-telephony circuitry (72) that transmits a radio beacon signal (44); and
at least one second hand holdable unit (22) having a display screen (48) and comprising direction finding (DF) circuitry (62) that receives a radio beacon (RB) signal transmitted by a given first unit (41, 42, 43) of the at least one first unit and determines from the received radio beacon signal an azimuth angle for the location of the first unit and a controller (64), which generates a display on the display screen(48) responsive to the azimuth angle that indicates a location of the given first unit,
the system **characterized in that** said at least one first and said at least one second unit further comprise circuitry (60) and apparatus (26, 64, 66) that provides conventional cell phone telephony, and **in that** said direction finding (DF) circuitry (62) and said non-telephony circuitry (72) allow said at least one first and said at least one second unit to exchange data messages over a non-telephony channel, responsive to the displayed location, said data messages enabling an ulterior communication between said at least one first and said at least one second unit via conventional cell phone telephony.

2. A direction finding system according to claim 1 wherein the conventional cell phone circuitry and the DF circuitry share an antenna.

3. A direction finding system according to claim or claim 2 wherein the direction finding circuitry comprises Watson-Watts direction finding circuitry.

4. A direction finding system according to claim 3 wherein for receiving RB signals the at least one second unit comprises a first antenna and a second antenna electrically connected to the Watson-Watts direction circuitry.

5. A direction finding system according to claim 4 wherein the antennae have an electrical length less than about one fifth the wavelength of a carrier wave of the radio beacon signal.

6. A direction finding system according to claim 4 or claim 5 wherein the two antennae are spaced apart by a distance less than about one fifth of the carrier wavelength.

7. A direction finding system according to any of claims 1-6 wherein the at least one second unit (22) comprises circuitry (60), and apparatus that provides conventional cell phone telephony.

8. A direction finding system according to claim 7 wherein the conventional cell phone circuitry and the DF circuitry comprised in the at least one second unit share an antenna.

9. A direction finding system according to any of the preceding claims wherein the direction finding circuitry (62) determines a range for the first unit of the at least one unit responsive to the received RB signal.

10. A direction finding system according to claim 9 wherein the controller (64) generates the display responsive to the determined range.

11. A direction finding system according to any of claims 1-10 wherein a second unit of the at least one second unit transmits an interrogation signal over the non-telephony channel responsive to which a first unit of the at least one first unit that receives the interrogation signal transmits an RB signal.

12. A direction finding system according to claim 11 wherein subsequent to transmitting the interrogation signal the second unit transmits at least one additional interrogation signal over the non-telephony channel.

13. A direction finding system according to claim 12 wherein each of the at least one additional interrogation signal is transmitted following a delay period that begins after a last RB signal received by the second unit that is transmitted by the at least one first unit responsive to the preceding interrogation signal.

14. A direction finding system according to any of claims 11-13 wherein each interrogation signal transmitted by the second unit comprises ID data specific to a user of the second unit.

15. A direction finding system according to claim 14 wherein each of the at least one first unit is programmable with preference data specific to a user of the first unit and if it receives an interrogation signal transmitted by the second unit it transmits an RB signal responsive thereto only if the ID data in the transmitted interrogation signal matches preference data with which it is programmed.

16. A direction finding system according to any of claims 11-15 wherein the transmitting circuitry of each first unit (41, 42, 43) transmits its RB signal following a predetermined delay period after receipt of an interrogation signal.

17. A direction finding system according to claim 16 wherein the predetermined delay period for each first unit is chosen from plurality of different delay periods so as to reduce a probability that any two of the first units that receive a same interrogation signal have a same delay period.

18. A direction finding system according to any of the preceding claims wherein each first unit (41, 42, 43) is programmable so that RB signals transmitted by the first unit comprises ID data specific to a user of the first unit.

19. A direction finding system according to claim 18 wherein each unit of the at least one second unit (22) is controllable by its user to transmit a signal comprising ID data that it receives in an RB signal from a given first unit whose location is indicated in the display, which given first unit is selectable by the user from the display.

20. A direction finding system according to claim 19 wherein the second unit is programmable with preference data specific to the second unit's user and wherein the location of a first unit is indicated on the screen only if ID data in the RB signal received from the first unit matches preference data with which it is programmed.

21. A direction finding system according any of the preceding claims wherein the display indicating a position of a first unit comprises an icon representing the first unit displayed against a background of a radar screen and wherein a location of the icon on the radar screen corresponds to a location of the first unit relative to the orientation of the second unit.

22. A direction finding system according to any of the preceding claims wherein a first unit of the at least one first unit (41, 42, 43) is programmable so that RB signals that it transmits comprises data encoding at least one visual cue characteristic of the user of the first unit.

23. A direction finding system according to claim 22 wherein the controller (64) of the at least one second unit (22) displays on the screen (48), in association with an icon representing a first unit, a visual cue of the at least one visual cue encoded in an RB signal it receives from the first unit.

## Patentansprüche

1. Peilsystem mit:
mindestens einem ersten Teil (41, 42, 43), welches in der Hand gehalten werden kann und nicht für Telefonzwecke dienende Schaltungen (72) umfasst, die ein Funkbakensignal (44) aussenden; und
mindestens einem zweiten Teil (22), welches in der Hand gehalten werden kann und einen Anzeigebildschirm (48) aufweist und Peil-(DF)-Schaltungen (62) umfasst, die ein Signal einer Funkbake (RB) empfangen, welches von einem gegebenen ersten Teil (41, 42, 43) von den wenigstens einen ersten Teilen ausgestrahlt worden ist, und welche aus dem empfangenen Signal der Funkbake einen Azimutwinkel für die Ortung des ersten Teils ermittelt und eine Steuereinrichtung (64), die eine Anzeige auf dem Anzeigebildschirm (48) erzeugt in Abhängigkeit von dem Azimutwinkel, der eine Richtung des gegebenen ersten Teils anzeigt, wobei das System **dadurch gekennzeichnet ist, dass** das zumindest eine erste und das zumindest eine zweite Teil weiter Schaltungen (60) und Vorrichtungen (26, 64, 66) umfasst, die übliche Mobilfunktelefonie zur Verfügung stellen und **dadurch**, **dass** die Peil-(DF)-Schaltungen (62) und die nicht für Telefonzwecke dienenden Schaltungen (72) dem zumindest einen ersten und dem zumindest einen zweiten Teil erlauben, Datennachrichten über einen nicht für Telefonzwecke dienenden Kanal zu übertragen in Reaktion auf die angezeigte Position, wobei diese Datenmitteilungen eine darüber hinausgehende Kommunikation zwischen dem wenigstens einem ersten und dem wenigstens einem zweiten Teil über übliche Mobilfunktelefonie ermöglichen.

2. Peilsystem nach Anspruch 1, wobei die konventionellen Mobilfunkschaltungen und die Peilschaltungen sich eine Antenne teilen.

3. Peilsystem nach Anspruch 1 oder Anspruch 2, wobei die Peilschaltungen Watson-Watts-Peilschaltungen umfassen.

4. Peilsystem nach Anspruch 3, wobei zum Empfang von Funkbaken-(RB)-Signalen das zumindest eine zweite Teil eine erste Antenne und eine zweite Antenne umfasst, die elektrisch mit den Watson-Watts-Peilschaltungen verbunden sind.

5. Peilsystem nach Anspruch 4, wobei die Antennen eine elektrische Länge von weniger als etwa ein Fünftel der Wellenlänge der Trägerwelle des Funkbakensignals haben.

6. Peilsystem nach Anspruch 4 oder Anspruch 5, wobei die beiden Antennen durch einen Abstand von weniger als etwa ein Fünftel der Trägerwellenlänge voneinander entfernt angeordnet sind.

7. Peilsystem nach einem der Ansprüche 1 bis 6, wobei das wenigstens eine zweite Teil (22) Schaltungen (60) und Vorrichtungen umfasst, die konventionelle Mobilfunktelefonie erlauben.

8. Peilsystem nach Anspruch 7, wobei die konventionellen Mobilfunkschaltungen und die Peilschaltungen, die in dem wenigstens einen zweiten Teil enthalten sind, sich eine Antenne teilen.

9. Peilsystem nach einem der vorhergehenden Ansprüche, wobei die Peilschaltungen (62) einen Bereich für das erste Teil von dem wenigstens einen Teil in Abhängigkeit von dem empfangenen Funkbaken-(RB)-Signal bestimmt.

10. Peilsystem nach Anspruch 9, wobei die Steuerschaltung (64) eine Anzeige in Anhängigkeit von dem ermittelten Bereich erzeugt.

11. Peilsystem nach einem der Ansprüche 1 bis 10, wobei ein zweites Teil von dem wenigstens einen zweiten Teil ein Befragungssignal über den nicht für Telefonzwecke dienenden Kanal übermittelt, aufgrund dessen ein Teil von dem wenigstens einen ersten Teil, das dieses Befragungssignal empfängt, ein Funkbaken-(RB)-Signal ausstrahlt.

12. Peilsystem nach Anspruch 11, wobei nach der Übertragung des Befragungssignals das zweite Teil wenigstens ein zusätzliches Befragungssignal über den nicht für Telefonzwecke dienenden Kanal überträgt.

13. Peilsystem nach Anspruch 12, wobei jedes der wenigstens einen zusätzlichen Befragungssignale nach einer Verzögerungszeit ausgestrahlt wird, welche beginnt, nachdem ein letztes Funkbaken-(RB)-Signal von dem zweiten Teil empfangen worden ist, welches von dem wenigstens einen ersten Teil in Erwiderung auf das vorhergehende Befragungssignal ausgestrahlt worden ist.

14. Peilsystem nach einem der Ansprüche 11 bis 13, wobei jedes Befragungssignal, welches von dem zweiten Teil ausgestrahlt wird, Identifikations-(ID)-Daten umfasst, die für einen Benutzer des zweiten Teils spezifisch sind.

15. Peilsystem nach Anspruch 14, wobei jedes der wenigstens einen ersten Teile mit Vorzugsdaten programmierbar ist, die für einen Nutzer des ersten Teils spezifisch sind, und bei Empfang eines Befragungssignals, welches von dem zweiten Teil ausgestrahlt worden ist, dieses ein Funkbaken-(RB)-Signal in Erwiderung darauf nur dann ausstrahlt, wenn die Identifizierungs-(ID)-Daten in dem ausgestrahlten Befragungssignal übereinstimmen mit den Vorzugsdaten, mit denen es programmiert ist.

16. Peilsystem nach einem der Ansprüche 11 bis 15, wobei die Sendeschaltungen von jedem ersten Teil (41, 42, 43), ihre Funkbaken-(RB)-Signale nach einer vorbestimmten Verzögerungszeit nach Empfang eines Befragungssignals ausstrahlen.

17. Peilsystem nach Anspruch 16, wobei die vorbestimmte Verzögerungszeit für jedes erste Teil von einer Vielzahl verschiedener Verzögerungszeitperioden ausgewählt ist, um so die Wahrscheinlichkeit zu reduzieren, dass irgendwelche zwei der ersten Teile, die das gleiche Befragungssignal empfangen, die gleiche Verzögerungszeit aufweisen.

18. Peilsystem nach irgendeinem der vorhergehenden Ansprüche, wobei jedes erste Teil (41, 42, 43) dergestalt programmierbar ist, dass Funkbaken-(RB)-Signale, die von dem ersten Teil übertragen werden, Identifizierungs-(ID)-Daten umfassen, die für einen Nutzer des ersten Teils spezifisch sind.

19. Peilsystem nach Anspruch 18, wobei jedes Teil von den wenigstens einen zweiten Teilen (22) von seinem Benutzer dergestalt gesteuert werden kann, dass es ein Signal ausstrahlt, welches Identifizierungs- (ID) -Daten umfasst, die es in einem Funkbaken-(RB)-Signal von einem gegebenen ersten Teil empfängt, dessen Standort in der Anzeige angezeigt ist, wobei dieses gegebene erste Teil durch den Benutzer von der Anzeige ausgewählt werden kann.

20. Peilsystem nach Anspruch 19, wobei das zweite Teil mit Vorzugsdaten, die für den Benutzer des zweiten Teils spezifisch sind, programmiert werden kann, und wobei der Standort eines ersten Teils auf dem Bildschirm nur dann angezeigt wird, wenn die Identifizierungs-(ID)-Daten in dem Funkbaken-(RB)-Signal, welches von dem ersten Teil empfangen worden sind, übereinstimmen mit Vorzugsdaten, mit denen es programmiert ist.

21. Peilsystem nach einem der vorhergehenden Ansprüche, wobei die Anzeige, die den Standort eines ersten Teils anzeigt, ein Bildsymbol umfasst, welches das erste Teil darstellt, und welches auf dem Hintergrund eines Radarschirmes gezeigt wird, und wobei der Ort des Bildsymbols auf dem Radarschirm dem Standort des ersten Teils relativ zu der Richtungsorientierung des zweiten Teils entspricht.

22. Peilsystem nach irgendeinem der vorhergehenden Ansprüche, wobei ein erstes Teil von dem wenigstens einen ersten Teil (41, 42, 43) dergestalt programmierbar ist, dass Funkbaken-(RB)-Signale, die es ausstrahlt, Daten umfassen, die zumindest ein Merkmal des Aussehens des Benutzers des ersten Teils kodieren.

23. Peilsystem nach Anspruch 22, wobei die Steuerschaltung (64) von dem wenigstens einen zweiten Teil (22) auf dem Bildschirm (48) zugeordnet zu dem Bildsymbol, welches ein erstes Teil repräsentiert, ein Aussehensmerkmal von dem wenigstens einen Aussehensmerkmal, welches in einem Funkbaken (RB)-Signal kodiert ist, welches es von dem ersten Teil empfängt, anzeigt.

## Revendications

1. Système radio goniométrique comprenant :
au moins une première unité portable (41, 42, 43) comprenant une circuiterie de non-téléphonie (72) qui transmet un signal radio balise (44) ; et
au moins une seconde unité portable (22) ayant un écran d'affichage (48) et comprenant une circuiterie radio goniométrique (DF) (62) qui reçoit un signal radio balise (RB) transmis par une première unité donnée (41, 42, 43) de la au moins une première unité et détermine à partir du signal radio balise reçu un angle azimut pour l'emplacement de la première unité et une unité de commande (64), qui génère un affichage sur l'écran d'affichage (48) en réponse à l'angle azimut qui indique un emplacement de la première unité donnée,
le système étant **caractérisé en ce que** ladite au moins une première et ladite au moins une seconde unité comprend en outre une circuiterie (60) et un appareil (26, 64, 66) qui fournit une téléphonie de téléphone cellulaire classique, et **en ce que** ladite circuiterie radio goniométrique (DF) (62) et ladite circuiterie de non-téléphonie (72) permettent à ladite au moins une première et ladite au moins une seconde unité d'échanger des messages de données sur un canal de non-téléphonie, en réponse à l'emplacement affiché, lesdits messages de données permettant une communication ultérieure entre ladite au moins une première et ladite au moins une seconde unité via la téléphonie de téléphone cellulaire classique.

2. Système radio goniométrique selon la revendication 1, dans lequel la circuiterie de téléphone cellulaire classique et la circuiterie DF partagent une antenne.

3. Système radio goniométrique selon la revendication 1 ou la revendication 2, dans lequel la circuiterie radio goniométrique comprend une circuiterie radio goniométrique de Watson-Watts.

4. Système radio goniométrique selon la revendication 3, dans lequel pour recevoir des signaux RB, la au moins une seconde unité comprend une première antenne et une seconde antenne électriquement connectée à la circuiterie radio goniométrique de Watson-Watts.

5. Système radio goniométrique selon la revendication 4, dans lequel les antennes ont une longueur électrique inférieure à environ un cinquième de la longueur d'onde d'une onde porteuse du signal radio balise.

6. Système radio goniométrique selon la revendication 4 ou la revendication 5, dans lequel les deux antennes sont séparées par une distance inférieure à environ un cinquième de la longueur d'ondes de l'onde porteuse.

7. Système radio goniométrique selon l'une quelconque des revendications 1 à 6, dans lequel la au moins une seconde unité (22) comprend une circuiterie (60), et un appareil qui fournit une téléphonie de téléphone cellulaire classique.

8. Système radio goniométrique selon la revendication 7, dans lequel la circuiterie de téléphone cellulaire classique et la circuiterie DF comprise dans la au moins une seconde unité partagent une antenne.

9. Système radio goniométrique selon l'une quelconque des revendications précédentes, dans lequel la circuiterie radio goniométrique (62) détermine une gamme pour la première unité de la au moins une unité en réponse au signal RB reçu.

10. Système radio goniométrique selon la revendication 9, dans lequel l'unité de commande (64) génère l'affichage en réponse à la gamme déterminée.

11. Système radio goniométrique selon l'une quelconque des revendications 1 à 10, dans lequel une seconde unité de la au moins une seconde unité transmet un signal d'interrogation sur le canal de non-téléphonie en réponse auquel une première unité de la au moins une première unité qui reçoit le signal d'interrogation transmet un signal RB.

12. Signal radio goniométrique selon la revendication 11, dans lequel après la transmission du signal d'interrogation, la seconde unité transmet au moins un signal d'interrogation additionnel sur le canal de non-téléphonie.

13. Système radio goniométrique selon la revendication 12, dans lequel chacun du au moins signal d'interrogation additionnel est transmis suite à une période de retard qui commence après un dernier signal RB reçu par la seconde unité qui est transmis par la au moins une première unité en réponse au signal d'interrogation précédent.

14. Système radio goniométrique selon l'une quelconque des revendications 11 à 13, dans lequel chaque signal d'interrogation transmis par la seconde unité comprend des données d'identification spécifiques à un utilisateur de la seconde unité.

15. Système radio goniométrique selon la revendication 14, dans lequel chacune de la au moins une première unité est programmable avec des données de préférence spécifiques à un utilisateur de la première unité et si elle reçoit un signal d'interrogation transmis par la seconde unité, elle transmet un signal RB en réponse à celui-ci uniquement si les données d'identification dans le signal d'interrogation transmis correspondent aux données de préférence avec lesquelles elle est programmée.

16. Système radio goniométrique selon l'une quelconque des revendications 11 à 15, dans lequel la circuiterie de transmission de chaque première unité (41, 42, 43) transmet son signal RB suite à une période de retard prédéterminée après réception d'un signal d'interrogation.

17. Système radio goniométrique selon la revendication 16, dans lequel la période de retard prédéterminée pour chaque première unité est choisie à partir d'une pluralité de périodes de retard différentes de sorte à réduire la probabilité que deux quelconques des premières unités qui reçoivent un signal d'interrogation identique aient une période de retard identique.

18. Système radio goniométrique selon l'une quelconque des revendications précédentes, dans lequel chaque première unité (41, 42, 43) est programmable de sorte que les signaux RB transmis par la première unité comprennent des données d'identification spécifiques à un utilisateur de la première unité.

19. Système radio goniométrique selon la revendication 18, dans lequel chaque unité de la au moins une seconde unité (22) est commandable par son utilisateur pour transmettre un signal comprenant des données d'identification qu'elle reçoit dans un signal RB d'une première unité donnée dont l'emplacement est indiqué sur l'affichage, laquelle première unité donnée peut être sélectionnée par l'utilisateur à partir de l'affichage.

20. Système radio goniométrique selon la revendication 19, dans lequel la seconde unité est programmable avec des données de préférence spécifiques à l'utilisateur de la seconde unité et dans lequel l'emplacement d'une première unité est indiqué sur l'écran uniquement si les données d'identification dans le signal RB reçu à partir de la première unité correspondent aux données de préférence avec lesquelles elle est programmée.

21. Système radio goniométrique selon l'une quelconque des revendications précédentes, dans lequel l'affichage indiquant une position d'une première unité comprend une icône représentant la première unité affichée sur un arrière-plan d'un écran radar et dans lequel un emplacement de l'icône sur l'écran radar correspond à un emplacement de la première unité par rapport à l'orientation de la seconde unité.

22. Système radio goniométrique selon l'une quelconque des revendications précédentes, dans lequel une première unité de la au moins une première unité (41, 42, 43) est programmable de sorte que les signaux RB qu'elle transmet comprennent des données codant au moins une caractéristique de repère visuel de l'utilisateur de la première unité.

23. Système radio goniométrique selon la revendication 22, dans lequel l'unité de commande (64) de la au moins une seconde unité (22) affiche sur l'écran (48), en association avec une icône représentant une première unité, un repère visuel du au moins un repère visuel codé dans un signal RB qu'elle reçoit de la première unité.
